Europäisches Patentamt

European Patent Office

Office européen des brevets

(19)

(11) Numéro de publication : **0 306 446 B1**

(12) **FASCICULE DE BREVET EUROPEEN**

(45) Date de publication du fascicule du brevet :
**08.04.92 Bulletin 92/15**

(21) Numéro de dépôt : **88810552.5**

(22) Date de dépôt : **15.08.88**

(51) Int. Cl.⁵ : $G02C\ 5/22$

(54) **Charnière élastique pour monture de lunettes.**

(30) Priorité : **19.08.87 CH 3190/87**

(43) Date de publication de la demande :
**08.03.89 Bulletin 89/10**

(45) Mention de la délivrance du brevet :
**08.04.92 Bulletin 92/15**

(84) Etats contractants désignés :
**AT DE ES FR IT**

(56) Documents cités :
**EP-A- 0 003 928**
**EP-A- 0 006 075**
**EP-A- 0 096 928**
**EP-A- 0 166 822**
**EP-A- 0 191 944**
**EP-A- 0 201 455**
**FR-A- 2 535 070**

(73) Titulaire : **LN INDUSTRIES S.A.**
**2, Rue des Falaises**
**CH-1211 Genève 8 (CH)**

(72) Inventeur : **Guy, Gabriel**
**2, route de France**
**F-74140 Vegy-Foncenex (FR)**
Inventeur : **Beyer, Karl-Heinz**
**49, avenue de Vaudagne**
**CH-1217 Meyrin (CH)**

(74) Mandataire : **Ardin, Pierre et al**
**PIERRE ARDIN & CIE 22, rue du Mont-Blanc**
**Case postale 60**
**CH-1211 Genève 1 (CH)**

## Description

L'invention se rapporte à une charnière à ressort pour monture de lunettes, comprenant : deux charnons dont un premier est destiné à être fixé à la partie face de la monture, et dont le second charnon est destiné à être relié à une branche de la monture; un boîtier longitudinal par rapport à la branche ouvert à au moins une de ses extrémités; une pièce en forme de tige étant solidaire du second charnon et montée à coulissement dans ce boîtier; un ressort de compression entourant cette pièce à l'intérieur du boîtier et prenant appui d'une part contre une surface de butée solidaire de la tige et d'autre part contre une surface du butée solidaire du boîtier, la pièce en forme de tige étant constituée par une vis dont l'extrémité filetée est engagée dans un alésage taraudé du deuxième charnon, la tête de cette vis constituant l'une des surfaces de butée.

Le brevet européen N° 0 003 928 décrit une charnière, comprenant un charnon mâle prolongé par une pièce partiellement filetée et coulissant dans un boîtier comportant un alésage parallèle à la branche de la monture sur laquelle est fixé le charnon. La pièce coulissante et l'alésage du boîtier comportent des portions de forme respectivement complémentaire, ce qui demande un usinage précis de ces deux composantes. De plus, la monture de lunettes ne présente pas un aspect esthétique.

Par le brevet allemand N° 34 24 263, on connaît une charnière, dans laquelle une bille assure le blocage d'une pièce de butée du ressort, cette bille s'encochant dans une ouverture prévue à cet effet dans la surface intérieure de la branche. Ce type de blocage est délicat et nécessite l'emploi d'un outil spécial.

Selon l'invention, on réalise une charnière constituée par des pièces de fabrication et de montage simples, permettant une ouverture maximale des branches de lunettes et la réalisation d'une monture de lunettes d'aspect esthétique. A cet effet, la charnière selon l'invention est caractérisée en ce que le boîtier est formé par un manchon ouvert à chacune de ses extrémités, la surface du butée solidaire du manchon étant constituée par une plaquette insérable transversalement dans le manchon par une ouverture ménagée dans une paroi de celui-ci, la plaquette possédant un trou pour le passage de la vis, et en ce que la plaquette est retenue dans le sens longitudinal du manchon par appui contre un bord de ladite ouverture.

Le dessin annexé représente schématiquement et à titre d'exemple une forme d'exécution de la charnière selon l'invention.

La figure 1 est une vue partiellement en coupe d'une partie de la monture de lunettes a la hauteur de la charnière.

La figure 2 est une vue en coupe du manchon.

La figure 3 est une vue en coupe selon la ligne III-III de la figure 1.

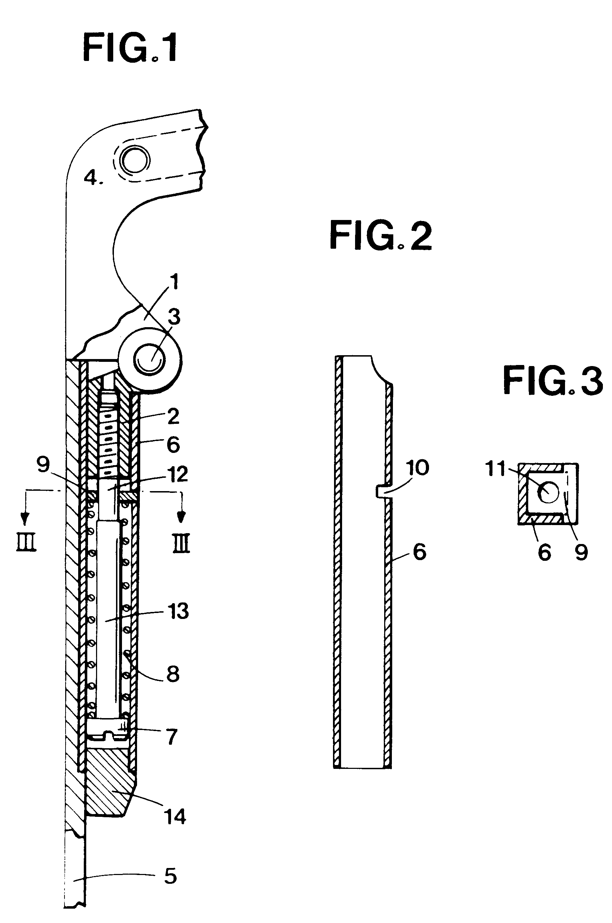

La charnière pour monture de lunettes représentée à la figure 1 comprend deux charnons 1 et 2 articulés l'un à l'autre grâce à un pivot constitué par une vis 3, l'un des charnons 1 étant rendu solidaire de la partie face 4 de la monture par des moyens connus.

L'autre charnon 2 est relié à une branche 5 de la monture par un élément élastique constitué par un manchon 6, de section droite sensiblement rectangulaire, dans lequel est montée coulissante une vis 7, l'extrémité filetée de cette vis 7 s'engageant dans un alésage taraudé prévu dans une partie du charnon 2 dont la surface extérieure correspond à la forme intérieure du manchon 6 et qui est engagée à coulissement dans ce dernier.

Le corps de la vis 7, de forme généralement cylindrique, est entouré par un ressort de compression 8 destiné à assurer le rappel élastique de la branche 5 lorsque celle-ci est déployée au-delà de sa position normale d'ouverture. Le ressort 8 prend appui d'une part contre la tête de la vis 7 et d'autre part contre une pièce de butée 9 introduite dans une ouverture 10 du manchon 6. Cette ouverture 10 (figure 2) est obtenue par fraisage transversal d'une paroi du manchon 6 et se prolonge sur une portion des deux parois adjacentes à la première.

La pièce de butée 9, montrée plus clairement à la figure 3, est une plaquette munie d'un trou 11 destiné à être traversé par une partie 12 du corps de la vis 7 pour permettre son coulissement dans le manchon 6. La plaquette 9 présente une forme généralement parallélépipédique, correspondant à la forme de la fente définie par l'ouverture 10 et les parois internes du manchon 6, de façon que lorsque cette plaquette est en place, son bord s'applique contre lesdites parois et elle remplit l'ouverture 10 pour venir à fleur des parois externes du manchon contiguës à cette ouverture.

Un bouchon 14, introduit de force ou par collage dans l'extrémité arrière du manchon 6, permet de cacher la tête de la vis 7 pour rendre la branche de lunettes plus esthétique.

Lors du montage, on introduit la partie du charnon 2 comportant l'alésage dans le manchon 6, on place la plaquette 9 dans l'ouverture 10 et on introduit, par l'extrémité arrière du manchon, la vis 7 entourée du ressort 8 en la faisant traverser le trou 11. Lorsque l'on visse l'extrémité filetée de cette vis dans l'alésage du charnon 2, la plaquette 9 est retenue dans le sens longitudinal du manchon 6 par appui contre le bord de l'ouverture 10. Cette plaquette est alors fermement rendue solidaire du manchon 6, ce dernier étant fixé à la branche 5 de la monture par soudure.

Cette disposition permet d'obtenir une ouverture élastique de la branche au-delà de sa position normale d'ouverture, montrée à la figure 1, et jusqu'à une position d'ouverture maximale grâce au coulissement du charnon 2 et de la vis 7 sollicités vers l'extérieur du manchon 6 contre l'action du ressort 8. Dans ce cas, la butée du bord de la branche 5 contre la partie face 4 de la monture défini une première position au-delà de la position d'ouverture normale, l'ouverture maximale de la branche étant déterminée par la butée d'une partie 13 du corps de la vis 7 contre la plaquette 9, cette partie 13 étant concentrique de la partie 12 qui traverse le trou 11 et présentant un diamètre supérieur au diamètre de ce trou. On voit alors que la position d'ouverture maximale de la branche peut être réglée en agissant sur le vissage de la vis 7 au charnon 2, pour déplacer cette vis longitudinalement.

Lors du rappel élastique de la branche 5, celle-ci s'arrête automatiquement dans sa position d'ouverture normale, son mouvement étant freiné par l'appui du manchon 6 sur le charnon 2.

Dans la forme d'exécution décrite, l'ouverture 10 prévue dans le manchon 6 est aménagée dans la surface de celui-ci qui est parallèle à la branche 5 et accessible de l'extérieur, mais il est bien évident que le manchon peut être fixé à la branche de façon que l'ouverture 10 se trouve en regard de la surface interne de cette branche et soit ainsi cachée par celle-ci.

Il est bien entendu que l'on peut prévoir d'autres variantes d'exécution. En particulier, l'élément élastique peut comporter, au choix, la branche mâle ou femelle de la charnière.

**Revendications**

1. Charnière à ressort pour monture de lunettes, comprenant : deux charnons (1, 2) dont un premier (1) est destiné à être fixé à la partie face de la monture (4), et dont le second charnon (2) est destiné à être relié à la branche (5) de la monture; un boîtier longitudinal (6) ouvert à au moins une de ses extrémités destiné à être disposé longitudinalement à l'extrémité de la branche (5), solidairement à celle-ci; une pièce en forme de tige (7) solidaire du second charnon (2) et montée à coulissement dans ce boîtier (6); et un ressort de compression (8) entourant cette pièce à l'intérieur du boîtier et prenant appui d'une part contre une surface de butée solidaire de la tige (7) et d'autre part contre une surface de butée solidaire du boîtier (9), la pièce en forme de tige étant constituée par une vis (7) dont l'extrémité filetée est engagée dans un alésage taraudé du deuxième charnon (2), la tête de cette vis constituant l'une des surfaces de butée, caractérisée en ce que le boîtier est formé par un manchon (6) ouvert à chacune de ses extrémités, la surface de butée solidaire du manchon étant constituée par une plaquette (9) insérable transversalement dans le manchon par une ouverture (10) ménagée dans une paroi de celui-ci, la plaquette possédant un trou (11) pour le passage de la vis, et en ce que la plaquette est retenue dans le sens longitudinal du manchon par appui contre un bord de ladite ouverture.

2. Charnière selon la revendication 1, caractérisée en ce que la partie du charnon (2), dans laquelle l'alésage taraudé est réalisé, présente une surface extérieure correspondant à la forme intérieure du manchon (6) et est engagée à coulissement dans ce dernier.

3. Charnière selon la revendication 1 ou 2, caractérisée par un bouchon (14) destiné à être introduit dans l'extrémité arrière du manchon (6).

4. Charnière selon l'une des revendications précédentes, caractérisée en ce que le manchon (6) est de section de forme générale rectangulaire, l'ouverture (10) étant obtenue par un fraisage transversal d'une paroi du manchon (6) et se prolongeant sur une portion des deux parois adjacentes, la plaquette (9) présentant un contour extérieur tel que son bord s'applique contre les parois internes du manchon (6) et qu'elle remplisse ladite ouverture (10) pour venir à fleur des parois externes contiguës à cette ouverture (10).

**Patentansprüche**

1. Federscharnier für Brillenfassungen, bestehend aus: zwei Scharnierteilen (1,2), deren erster (I) dazu bestimmt ist, auf dem Vorderteil (4) der Brillenfassung angebracht zu werden, und deren zweiter Teil (2) dazu bestimmt ist, mit einem Bügel (5) der Fassung verbunden zu werden; ein längliches Gehäuse (6), das am ende des Bügels (5) entlang diesem angeordnet und mit diesem fest verbunden sein soll und das an wenigstens einem ende offen ist; ein als Stiel geformtes Element (7), das mit dem zweiten Scharnierteil (2) fest verbunden ist und verschiebbar in diesem Gehäuse (6) angebracht ist; und eine Druckfeder (8), die dieses Element im Inneren des Gehäuses umgibt und einerseits gegen eine mit dem Stiel (7) fest verbundene Anschlagsfläche drückt, andererseits gegen eine Anschlagsfläche (9), die mit dem Gehäuse fest verbunden ist, wobei das stielförmige Element aus einer Schraube (7) gebildet wird, deren Gewinde-Ende in einer Bohrung mit Innengewinde des zweiten Scharnierteils (2) verschraubt ist, und deren Kopf eine der Anschlagsflächen bildet, dadurch gekennzeichnet, daß das Gehäuse in Form einer an ihren beiden Enden offenen Hülse (6) ausgebildet ist, wobei die mit der Hülse fest verbundene Anschlagsfläche aus einem Plättchen (9) gebildet wird, das quer zur Hülse durch ein in deren Wand befindliches Loch (10) eingeführt wird, wobei dieses Plättchen ein Loch (11) für den Durchtritt der Schraube besitzt, und daß das Plättchen in Längsrichtung der Hülse dadurch festgehalten wird, daß es gegen einen Rand der genannten Öffnung drückt,

2. Scharnier nach Anspruch 1, dadurch gekennzeichnet, daß der Teil des Scharnierteils (2), in dem die Gewindebohrung ausgeführt ist, eine Außenfläche aufweist, die der Form der Innenfläche der Hülse (6) entspricht, und verschiebbar in die Hülse eingepaßt ist.

3. Scharnier nach Anspruch 1 oder 2, dadurch gekennzeichnet, daß ein Stöpsel (14) vorgesehen ist, der dazu bestimmt ist, in das hintere Ende der Hülse (6) eingeführt zu werden.

4. Scharnier nach einem der vorhergehenden Ansprüche, dadurch gekennzeichnet, daß die Hülse (6) einen Querschnitt von im wesentlichen rechteckiger Form besitzt, die Öffnung (10) durch senkrechte Fräsung in eine Wand der Hülse 6 erhalten wird und sich in einem Teil der beiden an diese erste Wand anliegenden Wände fortsetzt, und daß das Plättchen (9) eine Außenkontur der Form aufweist, daß sein Rand sich gegen die Innenwände der Hülse (6) schmiegt und es die genannte Öffnung (10) so ausfüllt, daß es mit den an diese Öffnung (10) anliegenden Außenwänden eine ebene bildet.

## Claims

1. Sprung hinge for a spectacle frame, comprising: two knuckles (1, 2), the first of which (1) is designed to be fixed to the front part of the frame (4), ant the second knuckle of which (2) is designed to be connected to one side (5) of the frame; a longitudinal compartment (6) open at at least one end, designed to be disposed longitudinally at the end of the site (5), integral with the latter; a piece in the form of a rod (7) integral with the second knuckle (2) and mounted so as to slide in this compartment (6); and a compression spring (8) surrounding this piece inside the compartment and bearing on the one hand against a bearing surface integral with the rod (7) and on the other hand against a bearing surface integral with the compartment (9), the piece in the form of a rod being formed by a screw (7), the threaded end of which is engaged in a tapped bore in the second knuckle (2), the head of this screw constituting one of the bearing surfaces, characterised in that the compartment is formed by a sleeve (6) open at each end, the bearing surface integral with the sleeve being formed by a plate (9) which can be inserted transversely in the sleeve through an opening (10) provided in one wall of the latter, the plate having a hole (11) for the screw to pass through, and in that the plate is held in the longitudinal direction of the sleeve by bearing against an edge of the said opening.

2. Hinge according to claim 1, characterised in that the part of the knuckle (2) in which the tappet bore is produced has an external surface corresponding to the internal shape of the sleeve (6) and is engaged slidingly in the latter.

3. Hinge according to claim 1 or 2, characterised by a plug (14) designed to be inserted in the rear end of the sleeve (6).

4. Hinge according to one of the preceding claims, characterised in that the sleeve (6) has a cross section of generally rectangular shape, the opening (10) being obtained by a transverse milling of one wall of the sleeve (6) and extending over a part of the two adjacent walls, the plate (9) having an external shape such that its edge is pressed against the internal walls of the sleeve (6) and such that it fills the said opening (10) and stands slightly proud of the external surfaces contiguous to this opening (10).

# FIG.1

# FIG.2

# FIG.3